# EUROPÄISCHE PATENTANMELDUNG

(11) **EP 0 523 811 A1**
(43) Veröffentlichungstag der Anmeldung: **20.01.1993**
(21) Anmeldenummer: 92202184.5
(22) Anmeldetag: 16.07.1992
(51) Int. Cl.: B62J 15/00

(54) **Kotflügel**

(30) Priorität: 17.07.1991 IT BZ910024
(71) Anmelder: Gasser, Karl, I-39043 Chiusa BZ (IT)
(72) Erfinder: Gasser, Karl, I-39043 Chiusa BZ (IT)
(74) Vertreter: Faraggiana, Vittorio, Dr. Ing.

(57) **Zusammenfassung**

Beschrieben wird ein Kotflügel, insbesondere für Fahr- und Motorräder, der an einer Gabel (3, 25) des Fahr- oder Motorrades befestigt und gekrümmt angeordnet werden kann, um das Rad (4) längs eines bestimmten Sektors mit Abstand derart zu umgeben, daß die durch das Abrollen der Räder am Gelände verursachten Wasser- und Schlammspritzer den Benutzer des Fahrrades oder des Motorrades verhindert werden.
Gemäß der Erfindung besteht der Kotflügel aus einem Luftschlauch (17, 29) aus einem aufblasbarem Material, aus einem Halter (6, 26), an dem ein Ende des Luftschlauches (17, 29) befestigt ist, aus Befestigungsmitteln (13, 14), die zur Befestigung des Halters (6, 26) an der Gabel (3, 25) des Fahrrades oder des Motorrades bestimmt sind, und aus für das Aufblasen des Luftschlauches (17, 29) geeigneten Mitteln.

## Beschreibung

Die vorliegende Erfindung bezieht sich auf einen Kotflügel, insbesondere für Fahr- und Motorräder, gemäß dem Oberbegriff des Anspruchs 1.

Es ist das Problem bekannt, das Fahrradfahrer zu bewältigen haben, die die sogenannten "Mountain Bikes" benützen, die üblicherweise mit keinem Kotflügel versehen sind, um das Gewicht des Fahrrades selbst weitgehendst zu verringern. Befinden sich nämlich Fahrradfahrer auf einem schlammigen Gelände, so werden sie von Wasser- und Schlammspritzern beschmutzt, die durch das Abrollen der Räder am Gelände verursacht werden.

Die Aufgabe der vorliegenden Erfindung liegt in der Behebung des durch das beschriebene Problem dargestellten Nachteils und einen Kotflügel vorzuschlagen, der im Bedarfsfall verwendet werden kann.

Diese Aufgabe wird durch den kennzeichnenden Teil des Anspruches 1 gelöst.

Weitere Merkmale gehen aus den abhängigen Ansprüchen hervor.

Bevorzugte Ausführungsformen sind in den beigelegten Zeichnungen dargestellt. Es zeigen,
- Figur 1: eine erste Ausführungsform des erfindungsgemäßen Kotflügels in Seitenansicht,
- Figur 2: den Kotflügel aus Figur 1 in Draufsicht,
- Figur 3: den Kotflügel aus Figur 1 in Seitenansicht, jedoch nicht in Gebrauchsstellung,
- Figur 4: eine zweite Ausführungsform des erfindungsgemäßen Kotflügels, in Seitenansicht,
- Figur 5: den Kotflügel aus Figur 4 in Draufsicht, bevor die Gebrauchsstellung erreicht wird, und
- Figur 6: den Kotflügel aus Figur 4 in Seitenansicht in Nichtgebrauchsstellung.

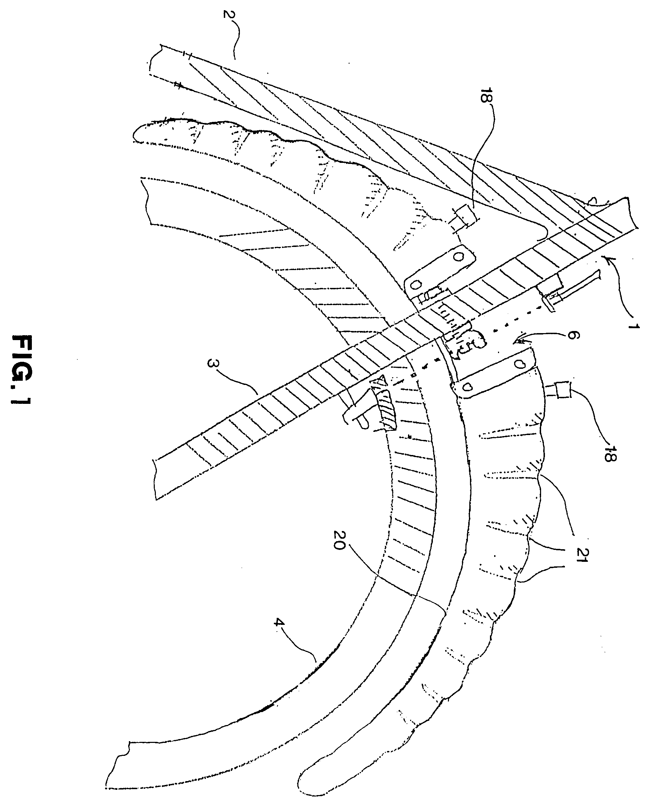

In Figur 1 ist teilweise der Vorderbereich eines im allgemeinen mit der Bezugsnummer 1 bezeichneten Fahrrades herkömmlicher Art dargestellt. Von einem nur teilweise angedeuteten Rahmen 2 erstreckt sich eine Gabel 3, in der ein Rad 4 drehbar gelagert ist.

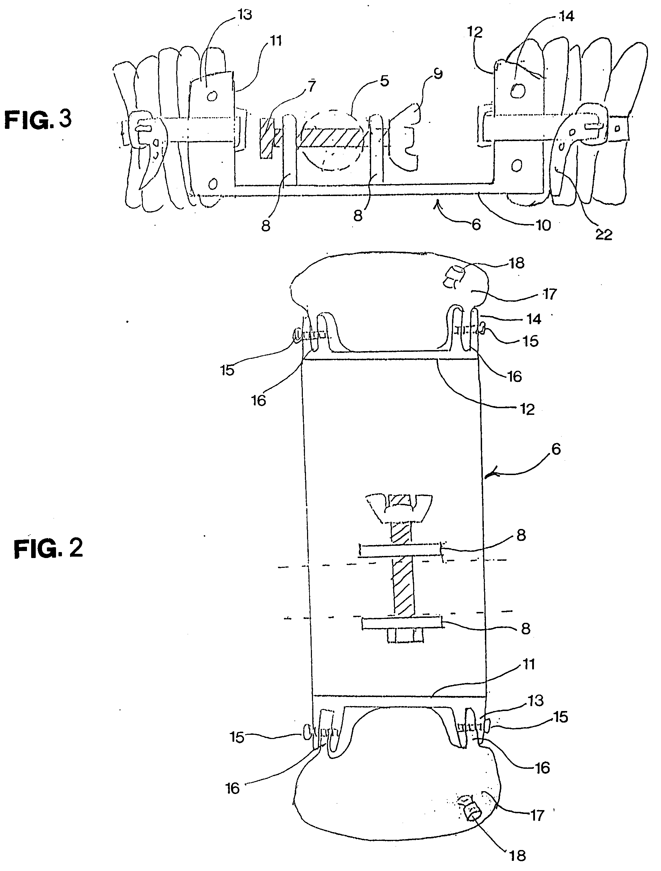

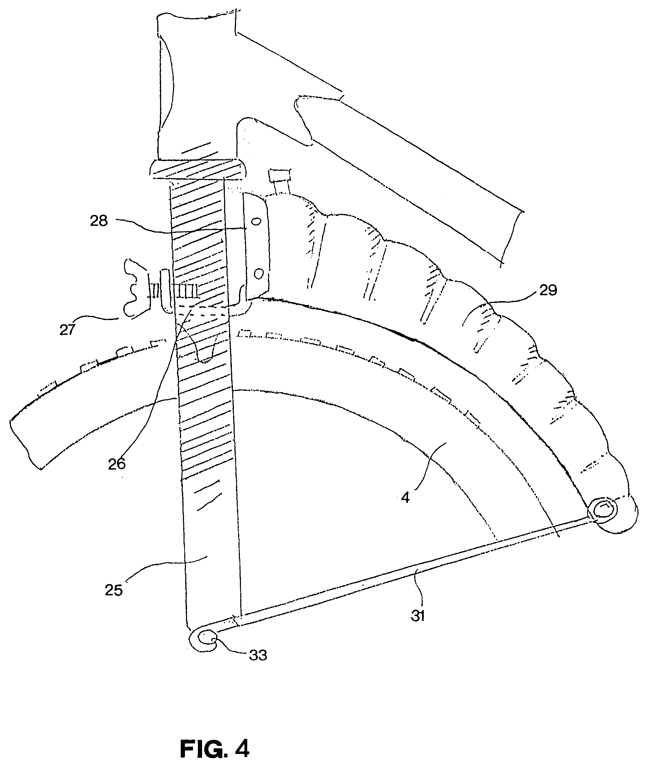

Erfindungsgemäß ist an der Gabel 3, an einer von dem Außenprofil des Rades 4 beabstandeten Stelle, beispielsweise an einem in Figur 3 gestrichelt mit 5 schematisch angegebenen Quersteg, ein Bügel 6 mittels einer Schraube 7 befestigt, die von zwei Haltern 8 gelagert wird und durch den Quersteg 5 geführt ist. Die Schraube 7 wird durch eine Flügelmutter 9 festgelegt. Der Bügel 6 weist eine vom Außenprofil des Rades 4 beabstandete Traverse 10 und zwei Endarme 11 und 12 auf, die sich von der Traverse 10 auf der zum Rad 4 entgegengesetzten Seite erstrecken. Von jedem Arm 11, 12 erstrecken sich außerhalb des Bügels 6 zwei Flanschen 13 bzw. 14. Wie aus Figur 2 ersichtlich, ist an jedem Flansch beispielsweise durch Schrauben 15 jeweils ein Lappen 16 befestigt, der von einem Luftschlauch 17 an einem dessen Enden vorsteht. Bevorzugt auf der zu jener nahe des Rades 4 entgegengesetzten Seite, ist jeder Luftschlauch mit einem Ventil 18 zum Aufpumpen des Luftschlauches 17 mittels Druckluft mit einem Ventil 18 versehen. Vorzugsweise sind die Ventile 18 gleich jenen des Rades 4, sodaß sowohl für den Luftschlauch 17 als auch für das Rad 4 für das Aufpumpen derselbe nicht dargestellte Pumpenanschluß verwendet werden kann.

Jeder Luftschlauch 17 wird durch einen geschlossenen, einen Boden 20 aufweisenden Schlauch gebildet, der einen solchen Aufbau aufweist, daß der Schlauch sich im wesentlichen mit demselben Abstand längs eines Sektors oberhalb des Oberprofils des Rades 4 anordnet, wenn der Luftschlauch 17 aufgeblasen ist. Dieser Aufbau könnte mit einer Mehrzahl von nicht gezeichneten Bodenverstärkungen versehen sein, die den Luftschlauch 17 in einer Richtung stabil halten, die zur durch das Rad 4 definierten Ebene senkrecht liegt. Jeder Luftschlauch 17 weist überdies oben eine Mehrzahl von einladenden Vertiefungen 21 auf, so daß jeder entleerte Luftschlauch auf den jeweiligen Arm 11,12 in Anlage gebracht werden kann, um den am Arm 11, 12 zusammengefalteten Luftschlauch mittels eines Riemens 22 zu verspannen.

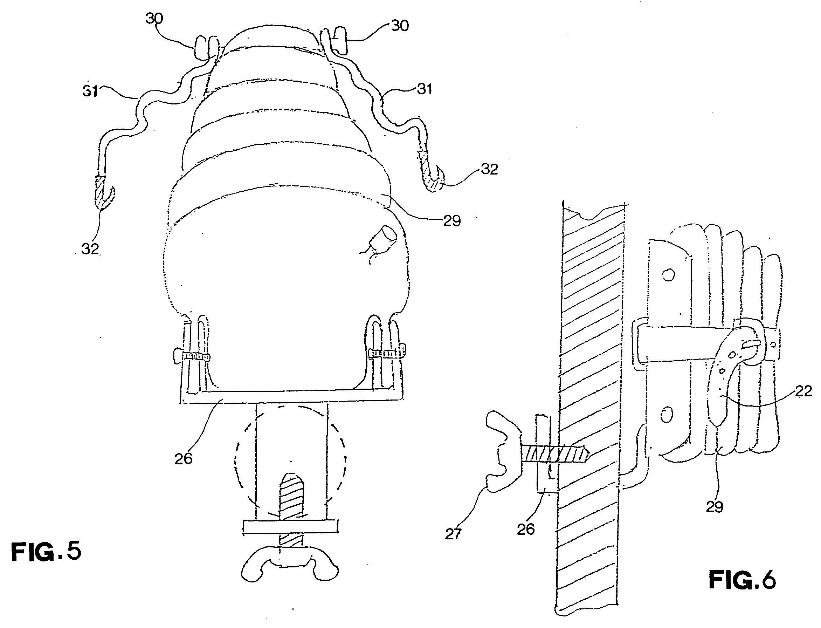

In Figur 4 bis 6 ist ein Rad 24 dargestellt, das in einer Gabel 25 gelagert ist, an der mittels einer Flügelschraube 27 ein Halbbügel 26 befestigt ist. Der Arm 28 des Halbbügels 26 ist wiederum gegenüber dem Rad 4 in Richtung der abgewandten Seite gerichtet und trägt wie oben beschrieben das eine Ende eines Luftschlauchs 29. Das freie Ende des Luftschlauchs 29 ist mit zwei zueinander auf derselben Höhe gegenüberliegenden Halteknöpfen 30 zur Befestigung eines der Enden jeweils einer Schnur 31 versehen, deren freies Ende in Form eines Hakens 32 ausgebildet ist, um im Bereich der Radnabe 33 derart eingehakt zu werden, daß der Luftschlauch 24 in stabiler Position gehalten wird.

Zahlreiche Varianten des erfindungsgemäßen Kotflügels sind möglich, ohne den Schutzbereich der vorliegenden Erfindung zu verlassen. Einige dieser Varianten könnten die folgenden sein:
1. Jeder Luftschlauch könnte innen durch Trennwände geteilt sein, die somit mehrere z.B. untereinander verbundene Kammern bilden oder, sollten diese nicht miteinander verbunden sein, ist jede Kammer mit einem eigenen Ventil für deren Aufpumpen versehen.
2. Das Querschnittprofil des Luftschlauches wird normalerweise symmetrisch zu einer Eben sein, in der das Rad des Fahrrades liegt. Es könnte jedoch jegliche geeignete Form aufweisen, z.B. mit Seitenvorsprüngen, die dachartig oberhalb des Oberprofils des Rades angeordnet sind.
3. Anstelle eines Bügels mit einem oder zwei Armen mit einem Befestigungsriemen, könnte auch ein geeignetes Gehäuse oder eine geeignete Hülse vorgesehen sein, in das bzw. die der entleerte Luftschlauch zusammengezogen eingebracht werden könnte, mit der Möglichkeit das Gehäuse mittels eines Deckels zur Aufbewahrung eines jeden Luftschlauchs bei Nichtbenützung zu schließen.

## Patentansprüche

1. Kotflügel, insbesondere für Fahr- und Motorräder, zur Befestigung an einer Fahrradgabel (3, 25) und zur gekrümmten Anordnung, um das Rad (4) längs eines bestimmten Sektors mit Abstand derart zu umgeben, daß die durch das Abrollen der Räder auf dem Gelände verursachten Wasser- und Schlammspritzer daran gehindert werden, den Benutzer des Fahrrades oder des Motorrades zu erreichen,
dadurch gekennzeichnet,
daß er aus einem Luftschlauch (17, 29) in einem aufblasbarem Material, aus einem Halter (6, 26), an dem ein Ende des Luftschlauches (17, 29) befestigt ist, aus Befestigungsmitteln (13, 14), die dazu bestimmt sind, den Halter an der Gabel (3, 25) des Fahrrades oder des Motorrades zu befestigen und aus zum Aufblasen des Luftschlauches (17, 29) geeigneten Mitteln besteht.

2. Kotflügel nach Anspruch 1, dadurch gekennzeichnet, daß der Halter aus einem Bügel (6, 26) besteht, der einen oder jeweils zwei Arme (11, 12; 28) aufweist, die auf der zum Rad (4) entgegengesetzten Seite angeordnet sind, wobei an jedem Arm (11, 12; 28) jeweils eines der Enden der Luftschläuche (17, 29) befestigbar ist.

3. Kotflügel nach Anspruch 2, dadurch gekennzeichnet, daß der entleerte, an jedem Arm (11, 12; 28) zusammengezogene Luftschlauch (17, 29) mittels eines Riemens (22) an jedem Arm (11, 12; 28) arretierbar ist.

4. Kotflügel nach Anspruch 1 und 2, dadurch gekennzeichnet, daß das andere Ende eines jeden Luftschlauches (17, 29) mittels mindestens einer Schnur (31) mit der Gabel (3; 25) derart verbunden ist, daß der Luftschlauch (17, 29) fest in Position gehalten wird.

5. Kotflügel nach den vorstehenden Ansprüchen, dadurch gekennzeichnet, daß jeder Luftschlauch mit einer zur Luftzuführung zum Luftschlauch bestimmten Ventil (18) versehen ist.

6. Kotflügel nach Anspruch 5, dadurch gekennzeichnet, daß das Ventil (18) gleich jenem der Räder (4) ist, so daß dieselbe Pumpe verwendet werden kann.

7. Kotflügel nach Anspruch 1, dadurch gekennzeichnet, daß der Halter durch einen Behälter gebildet ist, der einen entleerten, zusammengefügten Luftschlauch (17,29) aufnehmen und durch einen Deckel verschlossen werden kann.

8. Kotflügel nach den vorstehenden Ansprüchen, dadurch gekennzeichnet, daß jeder Luftschlauch Seitenvorsprünge aufweist, die dachartig seitlich am Oberprofil des Rades angeordnet sind.
